# EUROPÄISCHE PATENTSCHRIFT

(11) **EP 2 862 789 B1**
(45) Veröffentlichungstag und Bekanntmachung des Hinweises auf die Patenterteilung: **20.06.2018**
(21) Anmeldenummer: 13188977.6
(22) Anmeldetag: 16.10.2013
(51) Int. Cl.: B62M 6/45

(54) **Steuereinheit zur Verwendung in einem von einem Fahrer antreibbaren Fortbewegungsmittel**
Control unit for use in a means of locomotion which can be driven by a driver
Unité de commande destinée à être utilisée dans un moyen de déplacement pouvant être entraîné par un conducteur

(43) Veröffentlichungstag der Anmeldung: 22.04.2015
(73) Patentinhaber: Conti Temic Microelectronic GmbH, 90411 Nürnberg (DE)
(72) Erfinder: Schlotter, Michael, 90562 Heroldsberg (DE); Eglinger, Markus, 91456 Diespeck (DE); Salhi, Youssef, 90443 Nürnberg (DE); Breitenbach, Stephan, 90429 Nürnberg (DE); Welsing, David, 90411 Nürnberg (DE); Dameris, Ralf, 90443 Nürnberg (DE)
(74) Vertreter: Bonn, Roman Klemens

(56) Entgegenhaltungen:
- EP-A2- 1 129 932
- WO-A1-2012/066124
- DE-A1-102011 084 931
- DE-A1-102011 120 675
- DE-A1-102012 107 938
- DE-U1- 29 714 938
- JP-A- 2001 280 464
- JP-B- 4 056 130

## Beschreibung

Es werden eine Steuereinheit zur Verwendung in einem von einem Fahrer antreibbaren Fortbewegungsmittel, eine Antriebsvorrichtung mit einer solchen Steuereinheit sowie ein von einem Fahrer antreibbares Fortbewegungsmittel mit einer solchen Antriebsvorrichtung angegeben.
Die EP 1 129 932 A2 beschreibt eine Steuereinheit für ein von einem Fahrer antreibbares Fortbewegungsmittel. Die Steuereinheit ist eingerichtet, ein Schaltmittel und eine elektrische Antriebseinheit des Fortbewegungsmittels zu steuern.

Aus der gattungsgemässen DE 10 2012 107 938 A1 ist eine Steuereinheit einer in einem Fahrrad verwendeten Fahrradsteuervorrichtung bekannt. Diese ist eingerichtet, ein Schaltmittel und eine Antriebseinheit des Fahrrads zu steuern.
Eine zu lösende Aufgabe besteht darin, insbesondere eine Steuereinheit zur Verwendung in einem von einem Fahrer antreibbaren Fortbewegungsmittel, eine Antriebsvorrichtung mit einer solchen Steuereinheit sowie ein von einem Fahrer antreibbares Fortbewegungsmittel mit einer solchen Antriebsvorrichtung anzugeben, welche geringen Verschleiß, schnellen Gangwechsel, kurze Unterbrechung der Kraftübertragung, geringen Geräuschpegel während des Schaltvorgangs, geringe Unfallgefahr, hohen Fahrkomfort und/oder einen hohen Gesamtwirkungsgrad des Antriebssystems aufweisen.

Gemäß zumindest einer Ausführungsform der Steuereinheit zur Verwendung in einem von einem Fahrer antreibbaren Fortbewegungsmittel umfasst das Fortbewegungsmittel eine elektrische Antriebseinheit, eine durch Muskelkraft betreibbare mechanische Antriebseinheit, mindestens ein durch mindestens ein Schaltmittel schaltbares Getriebe sowie einen Abtrieb, wobei der Abtrieb dazu ausgebildet ist, ein erstes Drehmoment von der mechanischen Antriebseinheit aufzunehmen und ein zweites Drehmoment von der elektrischen Antriebseinheit aufzunehmen, wobei das schaltbare Getriebe dazu ausgebildet ist, ein drittes Drehmoment von dem Abtrieb aufzunehmen und in ein viertes Drehmoment umzusetzen, wobei das Fortbewegungsmittel unter Wirkung des vierten Drehmoments bewegbar ist.

Unter einem Getriebe ist hier und im Folgenden ein Element zu verstehen, welches dazu ausgebildet ist, ein auf das Element einwirkendes Drehmoment aufzunehmen und in der Folge seinerseits ein Drehmoment auszuüben. Das einwirkende Drehmoment wird also in das ausgeübte Drehmoment umgesetzt. Dabei besteht zwischen dem einwirkenden Drehmoment und dem ausgeübten Drehmoment ein wohlbestimmtes Verhältnis, welches bei einem festen Getriebe unveränderlich ist und bei einem schaltbaren Getriebe veränderbar ist, wobei die Veränderung des Verhältnisses als Schalten bezeichnet wird. Unter einem Abtrieb ist ein Element zu verstehen, welches dazu ausgebildet ist, ein oder mehrere Drehmomente aufzunehmen und zusammenzuführen. Dabei kann es sich beispielsweise um ein Kettenblatt, eine Riemenscheibe oder eine Welle handeln.

Als Steuereinheit im Sinne der vorliegenden Anmeldung ist auch eine Mehrzahl von (beispielsweise physisch separaten) Steuergeräten anzusehen, wenn diese als eine Einheit betrachtet werden können und die hier beschriebenen Funktionen ausüben können. Dies setzt im Allgemeinen einen Informationsfluss zwischen den verschiedenen Steuergeräten voraus. Beispielsweise können zwei Steuergeräte, von denen ein erstes dazu ausgebildet ist, eine elektrische Antriebseinheit zu steuern, und von denen ein zweites dazu ausgebildet ist, ein Schaltmittel zum Schalten eines schaltbaren Getriebes zu steuern, gemeinsam als Steuereinheit der vorliegenden Anmeldung betrachtet werden, wenn zwischen ihnen ein Informationsaustausch beispielsweise über eine Zustandsgröße der elektrischen Antriebseinheit, eine Position des Schaltmittels und/oder von mindestens einem der Steuergeräte berechnete Sollgrößen und/oder Schaltzeitpunkte erfolgen kann. Die verschiedenen Steuergeräte können beispielsweise in einer symmetrischen Beziehung zueinander stehen und/oder in mehreren Richtungen Informationen untereinander austauschen, oder ein Steuergerät kann beispielsweise als Controller dienen, welcher ein oder mehrere weitere Steuergeräte kontrolliert, beispielsweise ein Steuergerät zur Steuerung der elektrischen Antriebseinheit sowie ein Steuergerät zur Steuerung des Schaltmittels.

Bei der elektrischen Antriebseinheit handelt es sich vorzugsweise um einen Elektromotor. Bei der mechanischen Antriebseinheit handelt es sich vorzugsweise um eine Pedalkurbel. Bei dem Schaltmittel handelt es sich vorzugsweise um einen Schaltaktuator, insbesondere einen elektrischen Schaltaktuator. Das Fortbewegungsmittel kann auch mehr als einen Schaltaktuator, insbesondere genau zwei Schaltaktuatoren umfassen. Bei dem schaltbaren Getriebe handelt es sich vorzugsweise um eine kontinuierlich-variable oder diskrete Nabenschaltung. Wahlweise kann es sich bei dem schaltbaren Getriebe auch um eine Kettenschaltung handeln.

Die mechanische Antriebseinheit und die elektrische Antriebseinheit können jeweils unmittelbar oder über einen Freilauf, über ein festes Getriebe, über ein schaltbares Getriebe, über einen Riemen, über Zahnräder und/oder durch Reibschluss mit dem Abtrieb verbunden sein. Das erste Drehmoment und das zweite Drehmoment addieren sich an dem Abtrieb zu einem Gesamtdrehmoment, und das Gesamtdrehmoment kann entweder unmittelbar als drittes Drehmoment auf das schaltbare Getriebe wirken oder beispielsweise von einer Kette oder einem Riemen in ein drittes Drehmoment umgesetzt werden, welches auf das schaltbare Getriebe wirkt.

Dadurch, dass das Schaltmittel und die elektrische Antriebseinheit durch dieselbe Steuereinheit gesteuert werden, wird erreicht, dass zwischen der Steuerung des Schaltmittels und der Steuerung der elektrischen Antriebseinheit eine Abhängigkeit bestehen kann; das heißt, dass die Steuerung des Schaltmittels und die Steuerung der elektrischen Antriebseinheit miteinander koordiniert sein oder koordiniert werden können.

Die Steuereinheit ist dazu ausgebildet, eine Eigenschaft eines Schaltvorgangs festzulegen und das Schaltmittel und die elektrische Antriebseinheit auf Grundlage der Eigenschaft des Schaltvorgangs zu steuern, wobei die Eigenschaft des Schaltvorgangs ein Schaltzeitpunkt ist, so dass eine Einstellung eines neuen Übersetzungsverhältnisses nicht unmittelbar nach dessen Auswahl erfolgt, sondern erst zu einem nächsten von der Steuereinheit berechneten Schaltzeitpunkt.

Gemäß zumindest einer Ausführungsform der Steuereinheit umfasst das Fortbewegungsmittel ferner mindestens einen Sensor, und die Steuereinheit ist dazu ausgebildet, die Eigenschaft des Schaltvorgangs auf Grundlage mindestens einer von dem mindestens einen Sensor ermittelten Messgröße zu steuern. Bei der mindestens einen Messgröße kann es sich beispielsweise um das erste, zweite, dritte oder vierte Drehmoment, eine Fahrgeschwindigkeit, eine Steigung der Fahrstrecke, eine Herzfrequenz des Fahrers oder eine Kadenz handeln. Unter einer Kadenz wird hier und im Folgenden eine Winkelgeschwindigkeit einer Pedalkurbel verstanden. Vorzugsweise umfasst die mindestens eine Messgröße das erste Drehmoment, und die Steuereinheit ist dazu ausgebildet, den Schaltzeitpunkt so festzulegen, dass der zeitliche Verlauf des ersten Drehmoments während einer Dauer des Schaltvorgangs ein Minimum aufweist. Dadurch wird erreicht, dass das schaltbare Getriebe zu dem Schaltzeitpunkt möglichst wenig belastet ist. Dies führt zu geringerem Verschleiß, schnellerem Gangwechsel, kürzerer Unterbrechung der Kraftübertragung, geringerem Geräuschpegel während des Schaltvorgangs, geringerer Unfallgefahr, höherem Fahrkomfort sowie einem höheren Gesamtwirkungsgrad des Antriebssystems.

Vorzugsweise liegt ein das schaltbare Getriebe belastendes Drehmoment während des Schaltvorgangs unterhalb eines Grenzwerts von 25 Nm, besonders bevorzugt von 10 Nm. Vorzugsweise wird das das schaltbare Getriebe belastende Drehmoment innerhalb einer Sekunde, besonders bevorzugt innerhalb einer Viertelsekunde unter den Grenzwert gesenkt. Vorzugsweise ist die Kraftübertragung während des Schaltvorgangs weniger als eine Sekunde lang, besonders bevorzugt weniger als eine Viertelsekunde lang reduziert.

Zusätzlich oder wahlweise kann die mindestens eine Messgröße eine Position der mechanischen Antriebseinheit umfassen, und die Steuereinheit kann dazu ausgebildet sein, den Schaltzeitpunkt so festzulegen, dass zu dem Schaltzeitpunkt die mechanische Antriebseinheit eine bestimmte Position aufweist. Beispielsweise kann die mechanische Antriebseinheit eine Pedalkurbel sein, und die bestimmte Position kann beispielsweise eine vertikale Position sein oder eine Position, die beispielsweise einen Winkel von nicht mehr als 10° mit einer vertikalen Position einschließt. Dadurch wird erreicht, dass der Fahrer zu dem Schaltzeitpunkt ein möglichst geringes Drehmoment auf die Pedalkurbel aufbringen kann. Während bei einer Wahl des Schaltzeitpunkts anhand des aufgebrachten Drehmoments nicht ausgeschlossen werden kann, dass der Fahrer noch während des Schaltvorgangs plötzlich ein stark erhöhtes Drehmoment aufbringt, ist bei einer bestimmten, bauartabhängigen, beispielsweise vertikalen Position der Pedalkurbel das Aufbringen eines hohen Drehmoments anatomisch schwierig. Wahlweise kann die Position der mechanischen Antriebseinheit aus Messungen des ersten Drehmoments abgeleitet werden, welches beim Treten typischerweise einen im Wesentlichen periodischen Verlauf in Phase mit der Position der mechanischen Antriebseinheit aufweist.

Gemäß zumindest einer Ausführungsform der Steuereinheit ist die Steuereinheit dazu ausgebildet, das Schaltmittel und die elektrische Antriebseinheit so zu steuern, dass das von der elektrischen Antriebseinheit aufgebrachte Drehmoment während des Schaltvorgangs verringert ist oder verringert wird. Dadurch wird erreicht, dass das schaltbare Getriebe während des Schaltvorgangs möglichst wenig belastet ist.

Das schaltbare Getriebe kann insbesondere eine Kettenschaltung oder eine Nabenschaltung sein. Eine Kettenschaltung umfasst eine Kette sowie eine Mehrzahl von Drehelementen mit verschiedenen Durchmessern, beispielsweise Ritzeln und/oder Kettenrädern. Die Kettenschaltung kann geschaltet werden, indem die Kette mit verschiedenen Drehelementen in Eingriff gebracht wird. Eine Nabenschaltung ist eine in eine Radnabe integrierte Schaltung, in welcher die Drehmomente in der Regel durch ein oder mehrere Planetengetriebe umgesetzt werden.

Das Fortbewegungsmittel kann eine beliebige Anzahl von Rädern umfassen und kann somit beispielsweise ein Einrad, ein Zweirad, ein Dreirad oder ein Vierrad sein. Vorzugsweise ist das Fortbewegungsmittel ein Zweirad; das heißt, das Fortbewegungsmittel weist vorzugsweise genau zwei Räder auf. Das Zweirad kann insbesondere ein elektrisch unterstütztes Fahrrad, ein E-Bike oder ein Pedelec sein. Vorzugsweise bewirkt das vierte Drehmoment eine Beschleunigung des Fortbewegungsmittels, indem es auf das Hinterrad des Zweirads wirkt.

Es wird ferner eine Antriebsvorrichtung mit einer oben beschriebenen Steuereinheit angegeben, wobei die Antriebsvorrichtung eine elektrische Antriebseinheit, eine durch Muskelkraft betreibbare mechanische Antriebseinheit, mindestens ein Schaltmittel sowie einen Abtrieb umfasst, wobei der Abtrieb dazu ausgebildet ist, ein erstes Drehmoment von der mechanischen Antriebseinheit aufzunehmen und ein zweites Drehmoment von der elektrischen Antriebseinheit aufzunehmen.

Das schaltbare Getriebe kann in die Antriebsvorrichtung integriert sein. Dabei werden die von der mechanischen Antriebseinheit und der elektrischen Antriebseinheit aufgebrachten Drehmomente direkt oder über feste Getriebe vor dem schaltbaren Getriebe auf den Abtrieb zusammengeführt, welcher in diesem Fall beispielsweise eine Welle sein kann, und der Ausgang des schaltbaren Getriebes ist direkt oder über ein weiteres festes Getriebe beispielsweise mit einem Kettenblatt oder einer Riemenscheibe verbunden.

Ferner wird ein von einem Fahrer antreibbares Fortbewegungsmittel angegeben mit einer oben beschriebenen Antriebsvorrichtung sowie einem schaltbaren Getriebe, welches dazu ausgebildet ist, ein drittes Drehmoment von dem Abtrieb aufzunehmen und in ein viertes Drehmoment umzusetzen, wobei das Fortbewegungsmittel unter Wirkung des vierten Drehmoments bewegbar ist.

Im Folgenden werden die hier beschriebene Steuereinheit und das hier beschriebene Fortbewegungsmittel anhand von Ausführungsbeispielen und dazugehörigen Figuren 1, 2 und 3 näher erläutert.

Die Figur 1 zeigt eine schematische Darstellung der in dem hier beschriebenen Fortbewegungsmittel auftretenden Drehmomente und Beschleunigungen.

Die Figur 2 zeigt eine schematische Darstellung des Steuerungsprinzips eines Ausführungsbeispiels der hier beschriebenen Steuereinheit.

Die Figur 3 zeigt ein Ausführungsbeispiel des hier beschriebenen Fortbewegungsmittels.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

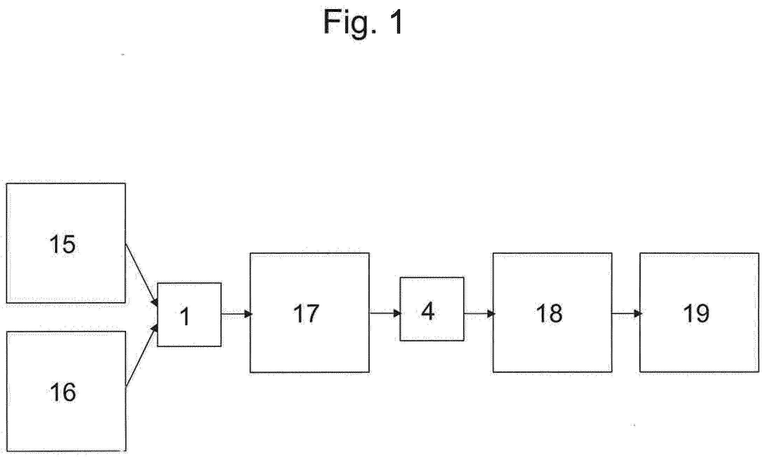

Die schematische Darstellung der Figur 1 zeigt die in dem hier beschriebenen Fortbewegungsmittel auftretenden Drehmomente und Beschleunigungen. Ein von dem Fahrer auf die mechanische Antriebseinheit aufgebrachtes erstes Drehmoment 15 und ein von der elektrischen Antriebseinheit aufgebrachtes zweites Drehmoment 16 werden an dem Abtrieb 1 zusammengeführt. Dadurch ergibt sich ein drittes Drehmoment 17, welches von dem schaltbaren Getriebe 4 in ein viertes Drehmoment 18 umgesetzt wird. Das vierte Drehmoment 18 bewirkt eine Beschleunigung 19 des Fortbewegungsmittels.

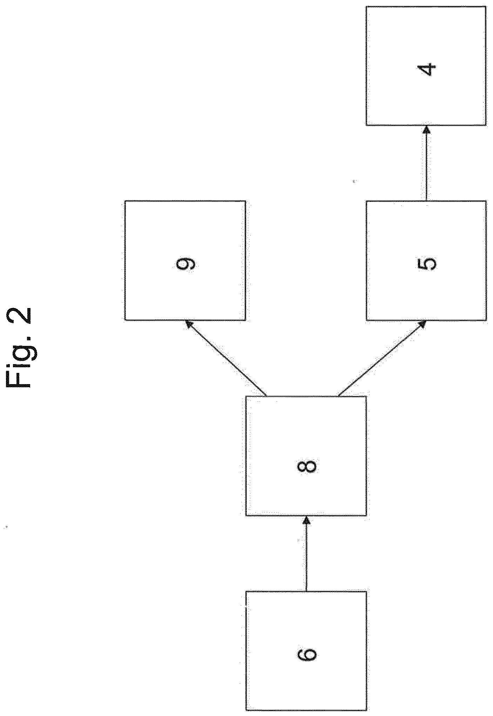

Die schematische Darstellung der Figur 2 zeigt das Steuerungsprinzip eines Ausführungsbeispiels der hier beschriebenen Steuereinheit. Ein Sensor 6 ermittelt mindestens eine Messgröße, die an eine Steuereinheit 8 übermittelt wird. Die Steuereinheit 8 regelt aufgrund der ermittelten Messgröße eine elektrische Antriebseinheit 9. Des Weiteren regelt die Steuereinheit 8 aufgrund der ermittelten Messgröße ein Schaltmittel 5. Das Schaltmittel 5 schaltet ein schaltbares Getriebe 4.

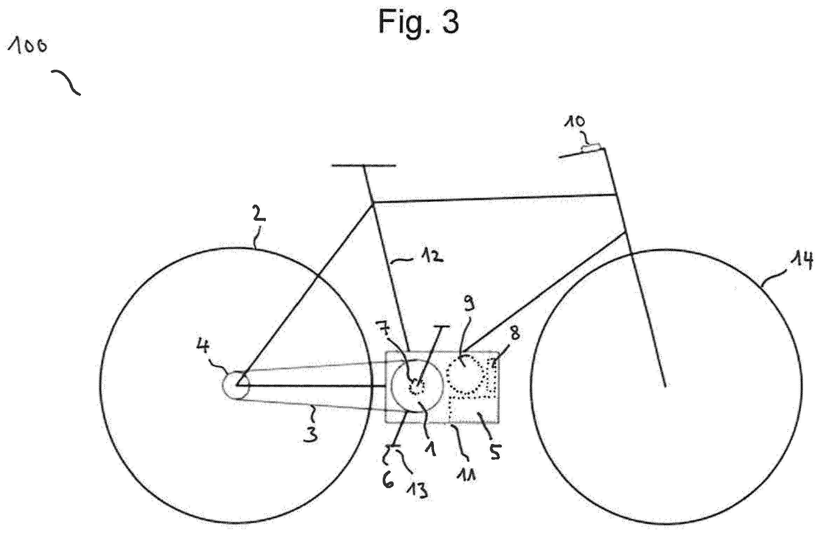

Die Figur 3 zeigt ein Ausführungsbeispiel des hier beschriebenen Fortbewegungsmittels. Das Fortbewegungsmittel ist in diesem Ausführungsbeispiel ein insgesamt mit 100 bezeichnetes E-Bike. Das E-Bike 100 umfasst eine insgesamt mit 200 bezeichnete Antriebsvorrichtung. Die Antriebsvorrichtung 200 umfasst ein Kettenblatt 1, welches als Abtrieb dient, einen Schaltaktuator 5, welcher als Schaltmittel dient, Sensoren 6, eine Tretlagerwelle 7, ein Tretlager mit mechanischer Verbindung zwischen der Tretlagerwelle 7 und dem Kettenblatt 1, eine Steuereinheit 8, einen elektrischen Antriebsmotor 9, Pedalkurbeln 13, welche als mechanische Antriebseinheit dienen, ein Gehäuse 11 sowie eine Aufnahme zur Befestigung an dem Rahmen 12 des E-Bikes 100. Das E-Bike 100 umfasst ferner ein Hinterrad 2 sowie ein Vorderrad 14, eine Kette 3, eine Nabenschaltung 4, welche als schaltbares Getriebe dient, sowie wahlweise eine Bedienvorrichtung 10. Der Schaltaktuator 5, die Sensoren 6 und die Steuereinheit 8 können jeweils wahlweise auch außerhalb der Antriebsvorrichtung 200 angebracht sein. Statt des Kettenblatts 1 und der Kette 3 können wahlweise auch eine Riemenscheibe und ein Riemen verwendet werden.

Die Nabenschaltung 4 kann kontinuierlich-variabel oder diskret ausgeführt sein und ist in die Radnabe des Hinterrads 2 integriert. Wahlweise kann als schaltbares Getriebe auch jede aus dem Stand der Technik bekannte Fahrradschaltung dienen, beispielsweise eine Kettenschaltung, welche ein Schaltwerk an dem Hinterrad 2 und optional einen Umwerfer in der Nähe der Tretlagerwelle 7 umfasst. Ein Verstellmechanismus der Nabenschaltung 4 ist durch Bowdenzüge, Getriebe und/oder andere mechanische Verbindungen mit dem Schaltaktuator 5 verbunden, welcher durch Positionsänderung das Übersetzungsverhältnis verstellen kann. Ist das schaltbare Getriebe als Kettenschaltung ausgeführt, so können das Schaltwerk und der optionale Umwerfer jeweils mit einem Schaltaktuator verbunden sein, und die Schaltaktuatoren können durch Positionsänderung den Gang verstellen. Die weitere Beschreibung bezieht sich auf den Fall, dass das schaltbare Getriebe als Nabenschaltung 4 ausgeführt ist; die beschriebenen Merkmale des Schaltaktuators 5 zur Änderung des Übersetzungsverhältnisses der Nabenschaltung 4 sind jedoch ebenso auch für Schaltaktuatoren zur Änderung des Ganges einer Kettenschaltung denkbar.

Die Steuereinheit 8 steuert sowohl den elektrischen Antriebsmotor 9 als auch den Schaltaktuator 5 und ist mit den Sensoren 6 verbunden, welche beispielsweise ein von dem Fahrer auf die Pedalkurbeln 13 aufgebrachtes Drehmoment, eine Fahrgeschwindigkeit, eine Position der Pedalkurbeln 13, eine Winkelgeschwindigkeit (Kadenz) der Pedalkurbeln 13 und/oder weitere Größen messen. Die Sensoren 6 sind in der Umgebung der Tretlagerwelle 7 angebracht. Wahlweise kann auch das Drehmoment an der Radnabe des Hinterrads 2 oder dem Kettenblatt 1 gemessen werden, wobei in diesen Fällen das berechnete oder gemessene Drehmoment des elektrischen Antriebsmotors 9 abzuziehen ist.

Die Bedienung durch den Fahrer erfolgt über die Pedalkurbeln 13. Wenn der Fahrer ein erstes Drehmoment auf die Pedalkurbeln 13 ausübt, wird dieses über die Tretlagerwelle 7 auf das Kettenblatt 1 übertragen. Gleichzeitig regelt die Steuereinheit 8 den elektrischen Antriebsmotor 9 so, dass er ein von der Steuereinheit 8 berechnetes zweites Drehmoment ausübt. Wahlweise kann die Steuereinheit 8 eine Leistung berechnen, die der elektrische Antriebsmotor 9 abgeben soll, und den elektrischen Antriebsmotor 9 so steuern, dass er ein der berechneten Leistung entsprechendes zweites Drehmoment ausübt. Mit der optionalen Bedienvorrichtung 10 kann die Berechnung des von dem elektrischen Antriebsmotor 9 auszuübenden zweiten Drehmoments vom Fahrer beeinflusst werden, beispielsweise durch die Änderung von Parametern, durch Aktivierung einer Schiebehilfe bei Nichtbetätigung der Pedalkurbeln 13 und/oder durch Deaktivierung des elektrischen Antriebsmotors 9 in einem Notfall.

Das erste und zweite Drehmoment werden an dem Kettenblatt 1 zusammengeführt und über die Kette 3 als ein drittes Drehmoment auf die Nabenschaltung 4 übertragen, welche das dritte Drehmoment in ein viertes Drehmoment übersetzt, welches auf das Hinterrad 2 wirkt, um das E-Bike 100 anzutreiben.

Der Schaltaktuator 5 wird positionsgeregelt oder positionsgesteuert betrieben. Das heißt, die Steuereinheit 8 gibt dem Schaltaktuator 5 eine Sollposition vor, und optional kann zusätzlich die Istposition des Schaltaktuators 5 gemessen und zur Regelung der Position des Schaltaktuators 5 durch die Steuereinheit 8 herangezogen werden. Optional kann zusätzlich eine Kraft- oder Stromüberwachung vorgesehen sein; das heißt, dass die von dem Schaltaktuator 5 aufgebrachte Kraft und/oder der durch den Schaltaktuator 5 fließende Strom auf einen bestimmten Wert begrenzt wird, um eine mechanische Schädigung, beispielsweise bei Stillstand des Fortbewegungsmittels 100, zu vermeiden.

Die Sollposition des Schaltaktuators 5 wird von der Steuereinheit 8 so vorgegeben, dass die Nabenschaltung 4 ein bestimmtes Übersetzungsverhältnis annimmt. Im Automatikmodus erfolgt die Wahl des Übersetzungsverhältnisses durch die Steuereinheit 8, basierend auf gemessenen Eingangsgrößen (beispielsweise Kadenz, Geschwindigkeit, Steigung, Herzfrequenz) und durch den Fahrer vorgegebenen Parametern (beipielsweise Wunschkadenz, Wunschdrehmoment, Zielherzfrequenz). Wahlweise kann der Antrieb auch in einem manuellen Modus betrieben werden, in dem der Fahrer das gewünschte Übersetzungsverhältnis direkt selbst wählt. Die Steuereinheit 8 überwacht ständig die momentane Kadenz, das vom Fahrer aufgebrachte Drehmoment, die Fahrgeschwindigkeit und/oder die Position der Pedalkurbeln 13. Mit diesen Daten berechnet die Steuereinheit 8 optimale Schaltzeitpunkte. Die Einstellung eines neuen Übersetzungsverhältnisses erfolgt nicht unmittelbar nach dessen Auswahl, sondern erst zum nächsten von der Steuereinheit 8 berechneten Schaltzeitpunkt. Zum gewählten Schaltzeitpunkt wird dann das Solldrehmoment des elektrischen Antriebsmotors 9 von der Steuereinheit 8 so beeinflusst und der Schaltaktuator 5 so angesteuert, dass der Schaltvorgang optimiert wird.

### Bezugszeichen

- 1: Kettenblatt
- 2: Hinterrad
- 3: Kette
- 4: Nabenschaltung
- 5: Schaltaktuator
- 6: Sensoren
- 7: Tretlagerwelle
- 8: Steuereinheit
- 9: elektrischer Antriebsmotor
- 10: Bedienvorrichtung
- 11: Gehäuse
- 12: Rahmen
- 13: Pedalkurbeln
- 14: Vorderrad
- 15: erstes Drehmoment
- 16: zweites Drehmoment
- 17: drittes Drehmoment
- 18: viertes Drehmoment
- 19: Beschleunigung

## Patentansprüche

1. Steuereinheit (8) zur Verwendung in einem von einem Fahrer antreibbaren Fortbewegungsmittel (100),
wobei das Fortbewegungsmittel (100) umfasst:
eine elektrische Antriebseinheit (9),
eine durch Muskelkraft betreibbare mechanische Antriebseinheit (13),
mindestens ein durch mindestens ein Schaltmittel (5) schaltbares Getriebe (4), und
einen Abtrieb (1),
wobei der Abtrieb (1) dazu ausgebildet ist, ein erstes Drehmoment (15) von der mechanischen Antriebseinheit (13) aufzunehmen und ein zweites Drehmoment (16) von der elektrischen Antriebseinheit (9) aufzunehmen,
wobei das schaltbare Getriebe (4) dazu ausgebildet ist, ein drittes Drehmoment (17) von dem Abtrieb aufzunehmen und in ein viertes Drehmoment (18) umzusetzen,
wobei das Fortbewegungsmittel (100) unter Wirkung des vierten Drehmoments (18) bewegbar ist, und
wobei die Steuereinheit (8) dazu ausgebildet ist, das Schaltmittel (5) und die elektrische Antriebseinheit (9) zu steuern, wobei die Steuereinheit (8) dazu ausgebildet ist, eine Eigenschaft eines Schaltvorgangs festzulegen und das Schaltmittel (5) und die elektrische Antriebseinheit (9) auf Grundlage der Eigenschaft des Schaltvorgangs zu steuern, wobei die Eigenschaft des Schaltvorgangs ein Schaltzeitpunkt ist, **dadurch gekennzeichnet, dass** eine Einstellung eines neuen Übersetzungsverhältnisses nicht unmittelbar nach dessen Auswahl erfolgt, sondern erst zu einem nächsten von der Steuereinheit (8) berechneten Schaltzeitpunkt.

2. Steuereinheit (8) nach Anspruch 1, wobei das Fortbewegungsmittel (100) ferner mindestens einen Sensor (6) umfasst und die Steuereinheit (8) dazu ausgebildet ist, die Eigenschaft des Schaltvorgangs auf Grundlage mindestens einer von dem mindestens einen Sensor (6) ermittelten Messgröße festzulegen.

3. Steuereinheit (8) nach Anspruch 2, wobei die mindestens eine Messgröße das erste Drehmoment (15) umfasst und die Steuereinheit (8) dazu ausgebildet ist, den Schaltzeitpunkt so festzulegen, dass der zeitliche Verlauf des ersten Drehmoments (15) während einer Dauer des Schaltvorgangs ein Minimum aufweist.

4. Steuereinheit (8) nach Anspruch 2 oder 3, wobei die mindestens eine Messgröße eine Position der mechanischen Antriebseinheit (13) umfasst und die Steuereinheit (8) dazu ausgebildet ist, den Schaltzeitpunkt so festzulegen, dass zu dem Schaltzeitpunkt die mechanische Antriebseinheit (13) eine bestimmte Position einnimmt.

5. Steuereinheit (8) nach einem der vorangehenden Ansprüche, wobei die Steuereinheit (8) dazu ausgebildet ist, das Schaltmittel (5) und die elektrische Antriebseinheit (9) so zu steuern, dass das von der elektrischen Antriebseinheit (9) aufgebrachte Drehmoment während des Schaltvorgangs verringert ist oder verringert wird.

6. Antriebsvorrichtung (200) mit einer Steuereinheit (8) nach einem der vorangehenden Ansprüche, umfassend:
eine elektrische Antriebseinheit (9),
eine durch Muskelkraft betreibbare mechanische Antriebseinheit (13),
mindestens ein Schaltmittel (5), und
einen Abtrieb (1),
wobei der Abtrieb (1) dazu ausgebildet ist, ein erstes Drehmoment (15) von der mechanischen Antriebseinheit (13) aufzunehmen und ein zweites Drehmoment (16) von der elektrischen Antriebseinheit (9) aufzunehmen.

7. Von einem Fahrer antreibbares Fortbewegungsmittel (100) mit einer Antriebsvorrichtung (200) nach Anspruch 8 sowie einem schaltbaren Getriebe (4), welches dazu ausgebildet ist, ein drittes Drehmoment (17) von dem Abtrieb (1) aufzunehmen und in ein viertes Drehmoment (18) umzusetzen, wobei das Fortbewegungsmittel (100) unter Wirkung des vierten Drehmoments (18) bewegbar ist.

8. Fortbewegungsmittel (100) nach einem der vorangehenden Ansprüche, wobei das Fortbewegungsmittel (100) ein Zweirad ist.

## Claims

1. Control unit (8) for use in a means (100) of locomotion which can be driven by a driver,
wherein the means (100) of locomotion comprises:
an electric drive unit (9),
a mechanical drive unit (13) which can be operated by muscle power,
at least one transmission (4) which can be shifted by at least one shifting means (5), and
an output (1),
wherein the output (1) is designed to take up a first torque (15) from the mechanical drive unit (13) and take up a second torque (16) from the electric drive unit (9),
wherein the shiftable transmission (4) is designed to take up a third torque (17) from the output and to convert it into a fourth torque (18),
wherein the means (100) of locomotion can be moved under the effect of the fourth torque (18), and
wherein the control unit (8) is designed to control the shifting means (5) and the electric drive unit (9), wherein the control unit (8) is designed to define a property of a shifting process and to control the shifting means (5) and the electric drive unit (9) on the basis of the property of the shifting process, wherein the property of the shifting process is a shifting time, **characterized in that** a setting of a new transmission ratio does not occur directly after its selection but rather only at a subsequent shifting time which is calculated by the control unit (8).

2. Control unit (8) according to Claim 1, wherein the means (100) of locomotion also comprises at least one sensor (6), and the control unit (8) is designed to define the property of the shifting process on the basis of at least one measurement variable determined by the at least one sensor (6).

3. Control unit (8) according to Claim 2, wherein the at least one measurement variable comprises the first torque (15), and the control unit (8) is designed to define the shifting time in such a way that the time profile of the first torque (15) has a minimum during a duration of the shifting process.

4. Control unit (8) according to Claim 2 or 3, wherein the at least one measurement variable comprises a position of the mechanical drive unit (13), and the control unit (8) is designed to define the shifting time in such a way that at the shifting time the mechanical drive unit (13) assumes a specific position.

5. Control unit (8) according to one of the preceding claims, wherein the control unit (8) is designed to control the shifting means (5) and the electric drive unit (9) in such a way that the torque which is applied by the electric drive unit (9) is in a reduced state or is reduced during the shifting process.

6. Drive device (200) with a control unit (8) according to one of the preceding claims, comprising:
an electric drive unit (9),
a mechanical drive unit (13) which can be operated by muscle power,
at least one shifting means (5), and
an output (1),
wherein the output (1) is designed to take up a first torque (15) from the mechanical drive unit (13) and to take up a second torque (16) from the electric drive unit (9).

7. Means (100) of locomotion which can be driven by a driver, with a drive device (200) according to Claim 8, and a shiftable transmission (4) which is designed to take up a third torque (17) from the output (1) and to convert it into a fourth torque (18), wherein the means (100) of locomotion can be moved under the effect of the fourth torque (18).

8. Means (100) of locomotion according to one of the preceding claims, wherein the means (100) of locomotion is a two-wheeled vehicle.

## Revendications

1. Unité de commande (8) destinée à être utilisée dans un moyen de locomotion (100) pouvant être entraîné par un conducteur,
dans laquelle ledit moyen de locomotion comprend (100) :
une unité d'entraînement électrique (9),
une unité d'entraînement pouvant être actionnée par une force musculaire (13),
au moins une transmission (4) pouvant être soumise à un changement de rapport par au moins un moyen de changement de rapport (5), et
un élément de sortie (1),
dans laquelle l'élément de sortie (1) est conçu pour recevoir un premier couple (15) en provenance de l'unité d'entraînement mécanique (13) et un deuxième couple (16) en provenance de l'unité d'entraînement électrique (9),
dans laquelle la transmission pouvant être soumise à un changement de rapport (4) est conçue pour recevoir un troisième couple (17) en provenance de l'élément de sortie et le convertir en un quatrième couple (18),
dans laquelle le moyen de locomotion (100) peut être déplacé sous l'action du quatrième couple (18), et
dans laquelle l'unité de commande (8) est conçue pour commander le moyen de changement de rapport (5) et l'unité d'entraînement électrique (9),
dans laquelle l'unité de commande (8) est conçue pour définir une caractéristique d'une opération de changement de rapport et pour commander le moyen de changement de rapport (5) et l'unité d'entraînement électrique (9) sur la base de la caractéristique de l'opération de changement de rapport, dans laquelle la caractéristique de l'opération de changement de rapport est un instant de changement de rapport,
**caractérisée en ce qu'**un réglage d'un nouveau rapport de transmission n'est pas effectué immédiatement après sa sélection, mais seulement à l'instant de changement de rapport calculé par l'unité de commande (8).

2. Unité de commande (8) selon la revendication 1, dans laquelle le moyen de locomotion (100) comprend en outre au moins un capteur (6) et l'unité de commande (8) est conçue pour déterminer la caractéristique de l'opération de changement de rapport sur la base d'au moins une grandeur de mesure déterminée par ledit au moins un capteur (6).

3. Unité de commande (8) selon la revendication 2, dans laquelle ladite au moins une grandeur de mesure comprend le premier couple (15) et l'unité de commande (8) est conçue pour déterminer l'instant de changement de rapport de manière à ce que le profil temporel du premier couple (15) présente un minimum pendant une durée de l'opération de changement de rapport.

4. Unité de commande (8) selon la revendication 2 ou 3, dans laquelle ladite au moins une grandeur de mesure comprend une position de l'unité d'entraînement mécanique (13), et l'unité de commande (8) est conçue pour définir l'instant de changement de rapport de manière à ce que l'unité d'entraînement mécanique (13) passe à une position déterminée à l'instant de changement de rapport.

5. Unité de commande (8) selon l'une quelconque des revendications précédentes, dans laquelle l'unité de commande (8) est conçue pour commander le moyen de changement de rapport (5) et l'unité d'entraînement électrique (9) de manière à ce que le couple appliqué par l'unité d'entraînement électrique (9) soit réduit ou diminue pendant l'opération de changement de rapport.

6. Dispositif d'entraînement (200) comprenant une unité de commande (8) selon l'une des revendications précédentes :
une unité d'entraînement électrique (9),
une unité d'entraînement mécanique (13) pouvant être actionnée par une force musculaire,
au moins un moyen de changement de rapport (5), et
un élément de sortie (1),
dans lequel l'élément de sortie (1) est conçu pour recevoir un premier couple (15) en provenance de l'unité d'entraînement mécanique (13) et un deuxième couple (16) en provenance de l'unité d'entraînement électrique (9).

7. Moyen de locomotion (100) pouvant être entraîné par un conducteur, comportant un dispositif d'entraînement (200) selon la revendication 8 et une transmission pouvant être soumise à un changement de rapport (4) conçue pour recevoir un troisième couple (17) en provenance de l'élément de sortie (1) et le convertir en un quatrième couple (18), dans lequel le moyen de locomotion (100) peut être déplacé sous l'action du quatrième couple (18).

8. Moyen de locomotion (100) selon l'une des revendications précédentes, dans lequel le moyen de locomotion (100) est un deux-roues.
